# EUROPEAN PATENT SPECIFICATION

(11) **EP 2 713 770 B1**
(45) Date of publication and mention of the grant of the patent: **06.12.2017**
(21) Application number: 12723698.2
(22) Date of filing: 25.05.2012
(51) Int. Cl.: A23D 7/005, A23D 7/01, A23D 7/02, A23K 40/20, A23K 20/174, A23K 20/158, A23P 10/35, A23P 30/20, A23L 29/10, A23L 33/105, A23L 33/115, A23L 33/15, A23L 33/155

(54) **EXTRUSION PROCESS AND EXTRUDATE RESULTING THEREFROM**
EXTRUSIONSVERFAHREN UND DARAUS HERVORGEHENDES EXTRUDAT
PROCÉDÉ D'EXTRUSION ET EXTRUDAT EN RÉSULTANT

(30) Priority: 27.05.2011 EP 11167927
(43) Date of publication of application: 09.04.2014
(73) Proprietor: DSM IP Assets B.V., 6411 TE Heerlen (NL)
(72) Inventor: FUNDA, Elger, 4002 Basel (CH); TELEKI, Alexandra, 4002 Basel (CH); BREMER, Leonardus Gerardus Bernardus, 6100 AA Echt (NL); ELEMANS, Pierre, 6100 AA Echt (NL); MEESEN, Adriaan Willem, 6100 AA Echt (NL)
(74) Representative: Kurt, Manfred
(86) International application number: PCT/EP2012/059849
(87) International publication number: WO 2012/163836

(56) References cited:
- WO-A1-2006/094995
- US-A1- 2001 008 635
- US-A1- 2004 201 116

## Description

The present invention relates to a process for the production of extruded formulations (= extrudates) comprising emulsion droplets, to such formulations as well as to the use of such formulations in food, feed, personal care applications.

There are many ways to formulate fat soluble compounds. Fat soluble compounds are for example oils and vitamins. The types of formulations are depending i.e. on the use of these formulations in the final application as well as on the kind of material (ingredients) which are used.

One way to formulate fat soluble compounds are dried emulsions. The fat soluble compound is emulsified in an oil-in-water emulsion wherein the aqueous phase contains a matrix material and/or a suitable emulsifier. After drying, the fat soluble compound is embedded in the matrix material.

Known technologies for emulsification are e.g. rotor-stator-systems, high pressure homogenizers or ultrasonic devices. A major disadvantage of these technologies is that a relatively low viscosity (usually below 1 Pas) is required, leading to high amounts of water in the emulsion, which needs to be removed at the end.

Extrusion processes (and extruders) are well known in the field of formulations. They can be used for many different kinds of materials. The technology was first used in the caoutchouc (natural gum) industry. But after some time, the food and feed industry adopted this technology for their purposes as well.

The main advantages of using the extrusion technology is that high viscous solutions can be formulated and less water can be used for the dispersion, which then requires less drying. Furthermore an extrusion process can be run as a continuous process.

It can be found in the prior art that emulsions comprising fat soluble vitamins are extruded. US 2004/0201116 discloses pellets which are obtained by a combination of producing emulsions using devices like high pressure homogenizers with subsequent direct pelleting or extrusion as a second process step.

WO 2006/094995 discloses a process for preparing a nutritional composition including protein, fat and carbohydrate.

US 2001/008635 discloses a method for the preparation of a composite material consisting of very fine inclusions of liquid, moderately to strongly hydrophobic active ingredients homogeneously dispersed in a thermoplastic matrix.

The goal of the present invention was to find a way to improve (also simplify) the production of extrudates comprising oil-in-water emulsion droplets, which comprise fat soluble compound(s), such as for example oils or vitamins.

A new way for the production of such extrudates was found. Surprisingly it was found out that when the emulsification is carried out inside the extruder, the process as well as the obtained extrudates are improved.

When the emulsification is carried out in the extruder (extrudation apparatus), this results in extrudates, wherein
(i) very small average dispersion droplets sizes can be obtained, and
(ii) a very narrow and monomodal distribution of the droplet sizes is obtained, and
(iii) such a process can easily be run as a continuous process, and
(iv) no organic solvent is used and
(v) less water can be used and therefore less energy for drying the extrudate is necessary.

Therefore the present invention relates to a process of production of an extrudate, wherein that extrudate comprises emulsion droplets, wherein these emulsion droplets comprise at least one fat soluble compound and at least one emulsifier and water, characterised in that the emulsifying process is carried out in the extruder.

Fat soluble vitamins such as vitamin A or its esters (for example vitamin A acetate and vitamin A palmitate), vitamin E or its esters (for example vitamin E acetate), vitamin K (phytomenadione) and vitamin D3 (cholecalciferol) are contemplated in the present invention. Such vitamins are readily available from commercial sources. Also, they may be prepared by conventional methods by a skilled person. Vitamins may be used in pure form, or in a suitable diluent such as a fat or oil.

Vitamin A and/or retinyl esters, such as e.g. retinyl palmitate and/or retinyl acetate and vitamin E or its esters (for example vitamin E acetate) are especially preferred.

Therefore the present invention is a process as described above, wherein the fat soluble compound is at least one fat soluble vitamin.

At least one emulsifier is used in the process according to the present invention. The emulsifier can be chosen depending on the final use of the extrudate afterwards. That means if the extrudate obtained by the process according to the present invention is used in food or feed product, the emulsifier must be food or feed grade.

Suitable emulsifiers are i.e. modified (food) starches, celluloses and cellulose derivatives (e.g. cellulose acetate, methyl cellulose, hydroxypropyl methyl cellulose) and lignosulfonate.

The starches can be modified physically and chemically. Pregelatinized starches are examples of physically modified starches. Acidic modified, oxidized, cross-linked, starch esters, starch ethers and cationic starches are examples of chemically modified starches.

A preferred embodiment therefore relates to process, wherein at least one emulsifier is chosen from the group consisting of modified (food) starches, celluloses and cellulose derivatives (e.g. cellulose acetate, methyl cellulose, hydroxypropyl methyl cellulose) and lignosulfonate.

Water is also used in the process according to the present invention. But as mentioned before, it is possible to run the process with a less water when compared to the usually used processes.

No organic solvent is used in the process according to the present invention.

It is also possible to add further ingredients (auxiliary agents) during the process of formulation (extrudation). Such auxiliary agents can be useful for the extrusion process and/or for the extrudate and/or for the product (or application), wherein the extrudate is used afterwards.

Such auxiliary agents are for example antioxidants (such as ascorbic acid or salts thereof, tocopherol (synthetic or natural)); butylated hydroxytoluene (BHT); butylated hydroxyanisole (BHA); propyl gallate; tert. butyl hydroxyquinoline and/or ascorbic acid esters of a fatty acid); ethoxyquin; plasticisers; stabilisers; humectants (such as glycerine, sorbitol, polyethylene glycol); protective colloids; dyes, fragrances; fillers and buffers.

These auxiliary agents are added optionally. When added then the amount of the auxiliary agents goes from 0.1 to 50 weight-% (wt.-%), based on the total weight of the extrudate.
The extrudates obtained by the process according to the present invention comprise:

| | |
|---|---|
| 1 wt.-% to 50 wt.-%, | based on the total weight of the extrudate, of at least one fat soluble compound, and |
| 5 wt.-% to 80 wt.-%, | based on the total weight of the extrudate, of at least one emulsifier, and |
| 1 wt.-% to 90 wt.-%, | based on the total weight of the extrudate, of water, and optionally |
| 0.1 wt.-% to 50 wt.-%, | based on the total weight of the extrudate, of at least one auxiliary agent. |

All the percentages always add up to 100.

All the preferences listed above for the fat soluble compounds, the emulsifiers and the auxiliary agents also apply to the composition of the extrudate.

Preferably 5 wt.-% to 30 wt.-%, based on the total weight of the extrudate, of at least one fat soluble compound is used.

Preferably 15 wt.-% to 80 wt.-%, more preferably 30 wt.-% to 80 wt.-%, based on the total weight of the extrudate, of at least one emulsifier is used.

Preferably 1 wt.-% to 80 wt.-%, more preferably 1 wt.-% to 60 wt.-%, especially preferably 1 to 40 wt.-%, based on the total weight of the extrudate, of water is used.

Especially for the modified food starches the water content is preferably 10 wt.-% to 30 wt.-%, based on the total weight of the extrudate.

One of the advantages of the present invention is that the size distribution of the average droplet sizes of the oil-in-water emulsion inside the extrudate is narrow and monomodal. This means that the fat soluble compound is nearly homogenously distributed inside the extrudate, which allows afterwards very precise dosages. Furthermore, the process according to the present invention allows to producing very small sized droplets of the oil-in-water emulsion inside the extrudate. The average droplet size can be as small as 50 nm. Usually the droplets are smaller than 1 µm.

Preferably the average droplet size (d_{3,2}) of the oil-in-water emulsion inside the extrudate is between 50 nm and 300 nm.
The droplet sizes are measured by using commonly known and standardized methods. Suitable methods are light scattering or laser diffraction.

More preferably the average droplet size (d_{3,2}) of the oil-in-water emulsion inside the extrudate is between 100 nm and 200 nm.

The extrusion process is characterised in that the emulsification is carried out inside the extruder. The three main ingredients (fat soluble compound and emulsifier and water) are added at different inlets of the extruder process. These inlets are arranged separated from each other. When (optionally) auxiliary agents are added, they can be added together with one or more of the main ingredients or they can also be added in a separate step.

The emulsifier is added first, then the water and then the fat soluble compound is added. It is also possible that one ingredient is added through more than one inlet of the extruder at different locations. Therefore the present invention relates to a process, wherein the emulsifier (or a mixture of emulsifiers) is added first, then the water and then afterwards the fat soluble compound (or a mixture of fat soluble compounds).

A preferred embodiment of the present invention relates to a process wherein the fat soluble compound is vitamin A (or a derivative). In this case vitamin A is either added
(i) as a liquid (molten) into the extruder, or
(ii) as a solid powder (optionally premixed with at least one modified (food) starch) and wherein the powder can be added to the process at the start of the extruder or at any stage)
The temperature inside the extruder is usually between 20 and 220 °C. Preferably the temperature of extrudate exiting the extruder is < 100 °C, more preferably the temperature inside the extruder is between 20 and 100 °C. The total residence time for the ingredients in the extruder is usually between 1 and 400 s.

The amount of shear of the extrudation process according to the present invention is usually 200 to 80000 units.
Furthermore, it is also possible to pump inert gas through the extruder. The inert gas is usually pumped in at the entrance of the extruder. But it could also be pumped in at any stage of the extrusion process (also through several inlets at different locations). Inert gas can be helpful to protect sensible ingredients.

The extruder comprises usually one or more screw shafts on which various conveying or kneading type screw elements are mounted.

The material is transported by these elements through the extruder (optionally under pressure and elevated temperature). At the end (exit) of the extruder there can be a die through which the extruded material is pressed. Afterwards the extruded material is dried and cut (or also vice versa). The extruder can have several inlets through which the material can be added.

In the case of the present invention there are several inlets to add the emulsifier(s), the fat soluble compound(s), water and optionally the auxiliary agents.

The present invention also relates to an extrudate obtainable by a process, wherein that extrudate comprises emulsion droplets, wherein these emulsion droplets comprise at least one fat soluble compound and at least one emulsifier and water, characterised in that the emulsifying process is carried out in the extruder.

All the preferences as described above also apply for such an extrudate obtainable by the inventive process.

A further embodiment of the present invention relates to new extrudates. These inventive extrudates comprise oil-in-water emulsion droplets which have a very small average droplet size, and wherein the distribution of the droplet sizes is narrow and monomodal.

Therefore the present invention relates to extrudates obtainable by the inventive process, characterised in that the average particle size of the oil-in-water emulsion droplets inside the extrudate are less than 300 nm (preferably the average particle size of the oil-in-water emulsion droplets is between 100 nm and 200 nm).

The average particle size of the oil-in-water emulsion droplets are measured by laser diffraction with a Malvern Mastersizer 2000 and Hydro 2000 S sample dispersion unit. The average particle size of the oil-in-water emulsion droplets can also be determined by dynamic light scattering, e.g with a Malvern Zetasizer Nano.

Preferred extrudates according to the present invention comprise:

| | |
|---|---|
| 1 wt.-% to 50 wt.-%, | based on the total weight of the extrudate, of at least one fat soluble compound, and |
| 5 wt.-% to 90 wt.-%, | based on the total weight of the extrudate, of at least one emulsifier, and |
| 1 wt.-% to 80 wt.-%, | based on the total weight of the extrudate, of water and optionally |
| 0.1 wt.-% to 50 wt.-%, | based on the total weight of the extrudate, of at least one auxiliary agent, |

characterised in that the average particle size of the oil-in-water emulsion droplets inside the extrudate are less than 300 nm (preferably the average particle size of the emulsion droplets is between 100 nm and 200 nm).

The extrudates as obtained by the process as described above can be used in many fields of applications. Preferably the extrudates as disclosed and described above are used in food, feed and personal care products.

Therefore a further embodiment of the present invention relates to the use of the extrudates as disclosed and described above in food, feed and/or personal care products. It is to be mentioned that dietary supplements are part of our definition of food products.

A further embodiment of the present invention relates to food, feed or personal care products comprising at least one of the extrudates as disclosed and described above.

### Figures

Fig.1: Schematic of the extruder as used in Example 1 and in Example 2
Fig.2: Schematic of the extruder as used in Example 3
Fig.3: Schematic of the extruder as used in Example 4
Fig.4: Schematic of the extruder as used in Example 5

The following Examples serve to illustrate the invention. All percentages and parts (if not otherwise indicated) are related to the weight. The temperature is given (if not otherwise indicated) in degree Celsius.

### Examples

### Example 1: Emulsification of corn oil in modified food starch

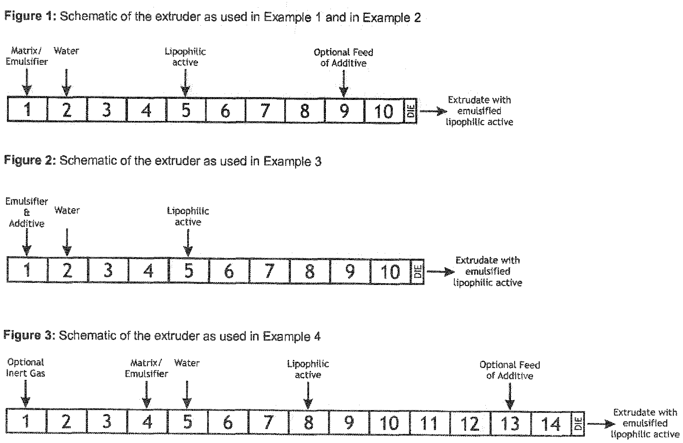

The extrusion emulsification of corn oil (not claimed) in modified food starch was conducted according to the schematic process flow shown in Figure 1.

The modified food starch (HICAP 100® from National Starch), here serving as both the matrix and emulsifier, was gravimetrically fed (Brabender Technologie) into the first barrel of a co-rotating twin screw extruder (Thermo Fisher Scientific, HAAKE Polylab OS with PTW16/40 OS twin screw extruder). The extruder consisted of 10 (electrically heated and water-cooled) barrels and an optional die head with a screw diameter of 16 mm and a length to diameter ratio of 40. Demineralized water was injected into the second barrel. A solution of the modified food starch in water was formed in the downstream barrels set to 80 °C (Table 1). Corn oil was injected into barrel 5 and mixed with the modified food starch solution in the following barrels. The extrudate mass containing the emulsified corn oil droplets could be collected as a paste from the open die head or as strands using appropriate extruder dies. A typical extrudate composition is shown in Table 2. The extrudate temperature did not exceed 70 °C.

A few hundred milligrams of the extrudate was dissolved in water under gentle stirring and the corn oil droplet size distribution was measured by laser diffraction with a Malvern Mastersizer 2000 and Hydro 2000 S sample dispersion unit. The resulting area weighted mean oil droplet diameter (d_{3,2}) was 165 nm. The droplet size distribution was monomodal and rather narrow with the following characteristics: d_{10%} = 82 nm, d_{50%} = 206 nm and d_{90%} = 719 nm.

**Table 1: Temperature settings of the extruder barrels**

| **Barrel** | **Temperature (°C)** |
|---|---|
| 1 | RT (room temperature) |
| 2 | 80 |
| 3 | 80 |
| 4 | 80 |
| 5 | 80 |
| 6 | 80 |
| 7 | 80 |
| 8 | 80 |
| 9 | 80 |
| 10 | 60 |
| die head | 60 |

**Table 2: Typical extrudate composition of emulsified com oil in modified food starch**

| **Ingredient** | **wt.-%** |
|---|---|
| Modified food starch (HICAP 100) | 70 |
| Water | 18 |
| Corn oil | 12 |

### Example 2: Emulsification of corn oil in modified food starch with an auxiliary agent

The extrusion emulsification of corn oil (not claimed) in modified food starch with an additive was conducted according to the schematic process flow shown in Figure 1 and as described in Example 1. However, into barrel 9 the auxiliary agent (microcrystalline cellulose Avicel PH101, FMC BioPolymer) was gravimetrically fed (Brabender Technologie) and mixed with the other ingredients in the last barrel of the extruder. The extrudate mass containing the emulsified corn oil droplets could be collected as a paste from the open die head or as strands using appropriate extruder dies. A typical extrudate composition is shown in Table 3.

A few hundred milligrams of the extrudate was dissolved in water under gentle stirring and the corn oil droplet size distribution was measured by laser diffraction with a Malvern Mastersizer 2000 and Hydro 2000 S sample dispersion unit. The resulting area weighted mean oil droplet diameter (d_{3,2}) was 135 nm. The droplet size distribution was monomodal and rather narrow with the following characterisitics: d_{10%} = 74 nm, d_{50%} = 162 nm and d_{90%} = 398 nm.

**Table 3: Typical extrudate composition of emulsified corn oil in modified food starch with an auxiliary agent**

| **Ingredient** | **wt.-%** |
|---|---|
| Modified food starch (HICAP 100) | 52 |
| Microcrystalline cellulose (Avicel PH101) | 26 |
| Water | 13 |
| Corn oil | 9 |

### Example 3: Emulsification of corn oil in modified food starch with auxiliary agent

The extrusion emulsification of corn oil (not claimed) in modified food starch with an auxiliary agent was conducted according to the schematic process flow shown in Figure 2. The emulsifier (modified food starch HICAP 100, National Starch) as well as the auxiliary agent (microcrystalline cellulose Avicel PH101, FMC BioPolymer) were both gravimetrically fed (Brabender Technologie) into the first barrel of a laboratory-scale co-rotating twin screw extruder (Thermo Fisher Scientific, HAAKE Polylab OS with PTW16/40 OS twin screw extruder). The extruder consisted of 10 (electrically heated and water-cooled) barrels and an optional die head with a screw diameter of 16 mm and a length to diameter ratio of 40. Demineralized water was injected into the second barrel. The temperature of barrels 2 to 10 as well as the die head was set to 50 °C. Corn oil was injected into barrel 5 and mixed with the modified food starch/microcrystalline cellulose in the following barrels. The extrudate mass containing the emulsified corn oil droplets could be collected as a paste from the open die head or as strands using appropriate extruder dies. A typical extrudate composition is shown in Table 4.

A few hundred milligrams of the extrudate was dissolved in water under gentle stirring and the corn oil droplet size distribution was measured by laser diffraction with a Malvern Mastersizer 2000 and Hydro 2000 S sample dispersion unit. The resulting area weighted mean oil droplet diameter (d_{3,2}) was 158 nm. The droplet size distribution was monomodal and rather narrow with the following characterisitics: d_{10%} = 85 nm, d_{50 %} = 196 nm and d_{90 %} = 441 nm. The corn oil droplet size was also determined with a Malvern Zetasizer Nano. A monomodal droplet size distribution was found with a peak maximum at 371 nm.

**Table 4: Typical extrudate composition of emulsified corn oil in modified food starch with an auxiliary agent**

| **Ingredient** | **wt.-%** |
|---|---|
| Modified food starch (HICAP 100) | 21 |
| Microcrystalline cellulose (Avicel PH101) | 32 |
| Water | 37 |
| Corn oil | 11 |

### Example 4: Emulsification of Vitamin A in modified food starch

The extrusion emulsification of Vitamin A in modified food starch (HICAP 100® from National Starch) was conducted according to the schematic process flow shown in Figure 3.

The process was carried out on a Coperion ZSK30 co-rotating twin-screw extruder with a length to diameter ratio of 44 and 14 barrels. Crystalline Vitamin A acetate (from DSM Nutritional Products) was used as the lipophilic compound. The process was carried out under inert gas atmosphere to protect the sensitive compound (to hydrolysis and oxidation) by dosing N₂ in barrel 1.

The modified food starch was gravimetrically fed (Colortronic C-Flex) to barrel 4 and pre-heated (at 80 °C) demineralized water was injected to barrel 5. The Vitamin A acetate was molten at 70 °C in a nitrogen atmosphere and added to the modified food starch solution in barrel 8 of the extruder. The compound was mixed into the matrix solution in the downstream barrels set to 60 °C (Table 5). The extrudate mass containing the emulsion oil droplets could be collected as a paste from the open die head or as strands using appropriate extruder dies. A typical extrudate composition is shown in Table 6. The extrudate temperature did not exceed 70 °C.

A few hundred milligrams of the extrudate was dissolved in water under gentle stirring and the Vitamin A oil droplet size distribution was measured by laser diffraction with a Malvern Mastersizer 2000 and Hydro 2000 S sample dispersion unit. The resulting area weighted mean oil droplet diameter (d_{3,2}) was 111 nm. The droplet size distribution was monomodal and rather narrow with the following characteristics: d_{10%} = 65 nm, d_{50%} = 130 nm and d_{90%} = 264 nm. The Vitamin A content in the extrudate was verified by HPLC (high-performance liquid chromatography), confirming that the compound oil component was not degraded or lost during the extrusion emulsification processing.

**Table 5: Temperature settings of the extruder barrels**

| **Barrel** | **Temperature (°C)** |
|---|---|
| 1 | RT (room temperature) |
| 2 | RT (room temperature) |
| 3 | RT (room temperature) |
| 4 | 80 |
| 5 | 80 |
| 6 | 80 |
| 7 | 80 |
| 8 | 60 |
| 9 | 60 |
| 10 | 60 |
| 11 | 60 |
| 12 | 60 |
| 13 | 60 |
| 14 | 60 |
| die head | 60 |

**Table 6: Typical extrudate composition of emulsified Vitamin A oil in modified food starch**

| **Ingredient** | **wt.-%** |
|---|---|
| Modified food starch (HICAP 100) | 67 |
| Water | 17 |
| Vitamin A acetate | 17 |

### Example 5: Emulsification of Vitamin E in lignosulfonate

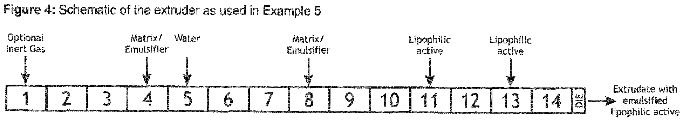

The extrusion emulsification of Vitamin E in lignosulfonate was conducted according to the schematic process flow shown in Figure 4. The process was carried out on a Coperion ZSK30 co-rotating twin-screw extruder with a length to diameter ratio of 44 and 14 barrels. dl-α-tocopherol (from DSM Nutritional Products) was used as a lipophilic compound.

The lignosulfonate was fed by a side feeder to barrel 4 and water was injected to barrel 5. Additional lignosulfonate could be added in barrel 8. The dl-α-tocopherol was injected in barrels 11 and 13 to the lignosulfonate solution in the extruder. All barrel temperatures were set to 60 °C. The extrudate mass containing the emulsion oil droplets could be collected as a paste from the open die head or as strands using appropriate extruder dies. A typical extrudate composition is shown in Table 7.

A few hundred milligrams of the extrudate was dissolved in water under gentle stirring and the dl-α-tocopherol oil droplet size distribution was measured by laser diffraction with a Malvern Mastersizer 2000 and Hydro 2000 S sample dispersion unit. The resulting area weighted mean oil droplet diameter (d_{3,2}) was 156 nm. The droplet size distribution was monomodal and rather narrow with the following characteristics: d_{10%} = 81 nm, d_{50%} = 196 nm and d_{90%} = 550 nm.

**Table 7: Typical extrudate composition of emulsified Vitamin E oil in lignosulfonate**

| **Ingredient** | **wt.-%** |
|---|---|
| Lignosulfonate | 73 |
| Water | 11 |
| Vitamin E | 16 |

## Claims

1. Process of production of an extrudate, wherein that extrudate comprises oil-in-water emulsion droplets and wherein these oil-in-water emulsion droplets comprise at least one fat soluble compound and at least one emulsifier and water, **characterised in that** the emulsifying process is carried out in the extruder, wherein the emulsifier (or a mixture of emulsifiers) is added first, then the water and then afterwards the fat soluble compound; and
wherein the at least one fat soluble compound is chosen from the group consisting of vitamin A or its esters (for example vitamin A acetate and vitamin A palmitate), vitamin E or its esters (for example vitamin E acetate), vitamin K (phytomenadione) and vitamin D3 (cholecalciferol) and wherein the least one emulsifier is chosen from the group consisting of modified (food) starches, celluloses and cellulose derivatives (e.g. cellulose acetate, methyl cellulose, hydroxypropyl methyl cellulose, microcrystalline cellulose), and lignosulfonate.

2. Process according to claim 1, wherein 1 wt.-% to 50 wt.-%, preferably 5 wt.-% to 30 wt.-%, based on the total weight of the extrudate, of at least one fat soluble compound is used.

3. Process according to any one of the preceding claims, wherein 5 wt.-% to 80 wt.-%, preferably 15 wt.-% to 80 wt.-%, more preferably 30 wt.-% to 80 wt.-%, based on the total weight of the extrudate, of at least one emulsifier is used.

4. Process according to any one of the preceding claims, wherein 1 wt.-% to 90 wt.-%, preferably 1 wt.-% to 80 wt.-%, more preferably 1 wt.-% to 60 wt.-%, based on the total weight of the extrudate, of water is used.

5. Process according to any one of claims 1 to 4, wherein 1 wt.-% to 30 wt.-%, based on the total weight of the extrudate, of water is used.

6. Process according to any one of the preceding claims, wherein 0.1 wt.-% to 50 wt.-%, based on the total weight of the extrudate, of at least one auxiliary agent is used.

7. Process according to claim 6, wherein the auxiliary agent is chosen from the group consisting of antioxidants (such as ascorbic acid or salts thereof, tocopherol (synthetic or natural); butylated hydroxytoluene (BHT); butylated hydroxyanisole (BHA); propyl gallate; tert. butyl hydroxyquinoline and/or ascorbic acid esters of a fatty acid); ethoxyquin; plasticisers; stabilisers; humectants (such as glycerine, sorbitol, polyethylene glycol); protective colloids; dyes; fragrances; fillers and buffers.

8. Process according to any one of the preceding claims, wherein the temperature inside the extruder is between 20 °C and 220 °C.

9. Process according to any one of the preceding claims, wherein the total residence time for the ingredients is between 1 and 400 s.

10. Extrudates obtainable by the process according to any of claims 1 to 9, **characterised in that** the average particle size of the oil-in-water emulsion droplets are less than 300 nm (preferably between 100 nm - 200 nm), measured by laser diffraction with a Malvern Mastersizer 2000 and Hydro 2000 S sample dispersion unit.

11. A food, feed or personal care product comprising at least one extrudate according to claim 10.

## Patentansprüche

1. Verfahren zum Herstellen eines Extrudats, wobei das Extrudat Öl-in-Wasser-Emulsionströpfchen umfasst und wobei diese Öl-in-Wasser-Emulsionströpfchen wenigstens eine fettlösliche Verbindung und wenigstens einen Emulgator und Wasser umfassen, **dadurch gekennzeichnet, dass** das Emulgierungsverfahren in dem Extruder durchgeführt wird, wobei zuerst der Emulgator (oder ein Gemisch von Emulgatoren) zugegeben wird, dann das Wasser und danach die fettlösliche Verbindung; und
wobei die wenigstens eine fettlösliche Verbindung ausgewählt ist aus der Gruppe bestehend aus Vitamin A oder seinen Estern (beispielsweise Vitamin-A-acetat und Vitamin-A-palmitat), Vitamin E oder seinen Estern (beispielsweise Vitamin-E-acetat), Vitamin K (Phytomenadion) und Vitamin D3 (Cholecalciferol) und wobei der wenigstens eine Emulgator ausgewählt ist aus der Gruppe bestehend aus modifizierten (Lebensmittel) stärken, Cellulosen und Cellulosederivaten (z. B. Celluloseacetat, Methylcellulose, Hydroxypropylmethylcellulose, mikrokristalline Cellulose) und Lignosulfonat.

2. Verfahren gemäß Anspruch 1, wobei 1 Gew.-% bis 50 Gew.-%, vorzugsweise 5 Gew.-% bis 30 Gew.-%, bezogen auf das Gesamtgewicht des Extrudats, an wenigstens einer fettlöslichen Verbindung verwendet wird.

3. Verfahren gemäß einem der vorstehenden Ansprüche,
wobei 5 Gew.-% bis 80 Gew.-%, vorzugsweise 15 Gew.-% bis 80 Gew.-%, bevorzugter 30 Gew.-% bis 80 Gew.-%, bezogen auf das Gesamtgewicht des Extrudats, an wenigstens einem Emulgator verwendet wird.

4. Verfahren gemäß einem der vorstehenden Ansprüche,
wobei 1 Gew.-% bis 90 Gew.-%, vorzugsweise 1 Gew.-% bis 80 Gew.-%, bevorzugter 1 Gew.-% bis 60 Gew.-%, bezogen auf das Gesamtgewicht des Extrudats, Wasser verwendet wird.

5. Verfahren gemäß einem der Ansprüche 1 bis 4, wobei 1 Gew.-% bis 30 Gew.-%, bezogen auf das Gesamtgewicht des Extrudats, Wasser verwendet wird.

6. Verfahren gemäß einem der vorstehenden Ansprüche,
wobei 0,1 Gew.-% bis 50 Gew.-%, bezogen auf das Gesamtgewicht des Extrudats, an wenigstens einem Hilfsstoff verwendet wird.

7. Verfahren gemäß Anspruch 6, wobei der Hilfsstoff ausgewählt ist aus der Gruppe bestehend aus Antioxidationsmitteln (wie z. B. Ascorbinsäure oder Salze davon; Tocopherol (synthetisch oder natürlich); butyliertes Hydroxytoluol (BHT); butyliertes Hydroxyanisol (BHA); Propylgallat; tert-Butylhydroxychinolin und/oder Ascorbinsäureester einer Fettsäure); Ethoxyquin; Weichmachern; Stabilisatoren; Feuchthaltemitteln (wie z. B. Glycerin, Sorbit, Polyethylenglycol); Schutzkolloiden; Farbstoffen; Duftstoffen; Füllstoffen und Puffern.

8. Verfahren gemäß einem der vorstehenden Ansprüche,
wobei die Temperatur im Inneren des Extruders zwischen 20 °C und 220 °C beträgt.

9. Verfahren gemäß einem der vorstehenden Ansprüche,
wobei die Gesamtverweilzeit für die Inhaltsstoffe zwischen 1 und 400 s beträgt.

10. Extrudat, erhältlich durch das Verfahren gemäß einem der Ansprüche 1 bis 9,
**dadurch gekennzeichnet, dass** die mittlere Partikelgröße der Öl-in-Wasser-Emulsionströpfchen weniger als 300 nm beträgt (vorzugsweise zwischen 100 nm und 200 nm), gemessen durch Laserdiffraktion mit einem Malvern Mastersizer 2000 und einer Hydro 2000 S Probendispersionseinheit.

11. Lebensmittel, Futtermittel oder Körperpflegeprodukt, umfassend wenigstens ein Extrudat gemäß Anspruch 10.

## Revendications

1. Procédé de production d'un extrudat, dans lequel cet extrudat comprend des gouttelettes d'émulsion huile-dans-eau et où ces gouttelettes d'émulsion huile-dans-eau comprennent au moins un composé liposoluble et au moins un émulsifiant et de l'eau, **caractérisé en ce que** le procédé d'émulsification est effectué dans une extrudeuse, où l'émulsifiant (ou un mélange d'émulsifiants) est ajouté en premier, puis l'eau et ensuite le composé liposoluble ; et
où le au moins un composé liposoluble est choisi dans le groupe constitué par la vitamine A ou ses esters (par exemple l'acétate de vitamine A et le palmitate de vitamine A), la vitamine E ou ses esters (par exemple l'acétate de vitamine E), la vitamine K (phytoménadione) et la vitamine D3 (cholécalciférol), et où le au moins un émulsifiant est choisi dans le groupe constitué par les amidons (alimentaires) modifiés, les celluloses et les dérivés de cellulose (par exemple l'acétate de cellulose, la méthylcellulose, l'hydroxypropyl méthylcellulose, la cellulose microcristalline), et le lignosulfonate.

2. Procédé selon la revendication 1, dans lequel on utilise de 1% en poids à 50% en poids, préférablement de 5% en poids à 30% en poids, sur la base du poids total de l'extrudat, d'au moins un composé liposoluble.

3. Procédé selon l'une quelconque des revendications précédentes, dans lequel on utilise de 5% en poids à 80% en poids, préférablement de 15% en poids à 80% en poids, plus préférablement de 30% en poids à 80% en poids, sur la base du poids total de l'extrudat, d'au moins un émulsifiant.

4. Procédé selon l'une quelconque des revendications précédentes, dans lequel on utilise de 1% en poids à 90% en poids, préférablement de 1% en poids à 80% en poids, plus préférablement de 1% en poids à 60% en poids, sur la base du poids total de l'extrudat, d'eau.

5. Procédé selon l'une quelconque des revendications 1 à 4, dans lequel on utilise de 1% en poids à 30% en poids, sur la base du poids total de l'extrudat, d'eau.

6. Procédé selon l'une quelconque des revendications précédentes, dans lequel on utilise de 0,1% en poids à 50% en poids, sur la base du poids total de l'extrudat, d'au moins un agent auxiliaire.

7. Procédé selon la revendication 6, dans lequel l'agent auxiliaire est choisi dans le groupe constitué par les antioxydants (tels que l'acide ascorbique ou des sels de celui-ci, le tocophérol (synthétique ou naturel) ; l'hydroxytoluène butylé (BHT) ; l'hydroxyanisole butylé (BHA) ; le gallate de propyle ; la tertio-butyl-hydroxyquinoléine et/ou les esters d'acide ascorbique d'un acide gras) ; l'éthoxyquine ; les plastifiants ; les stabilisants ; les humectants (tels que le glycérol, le sorbitol, le propylène glycol) ; les colloïdes protecteurs ; les colorants, les parfums ; les charges et les tampons.

8. Procédé selon l'une quelconque des revendications précédentes, dans lequel la température à l'intérieur de l'extrudeuse est comprise entre 20°C et 220°C.

9. Procédé selon l'une quelconque des revendications précédentes, dans lequel le temps de séjour total pour les ingrédients est compris entre 1 et 400 s.

10. Extrudats pouvant être obtenus par le procédé selon l'une quelconque des revendications 1 à 9, **caractérisés en ce que** la taille de particules moyenne des gouttelettes d'émulsion huile-dans-eau est inférieure à 300 nm (préférablement de 100 nm-200 nm), mesurée par diffraction laser à l'aide d'un Malvern Mastersizer 2000 et d'une unité de dispersion d'échantillon Hydro 2000 S.

11. Produit d'alimentation humaine, animale, ou produit de soin personnel, comprenant au moins un extrudant selon la revendication 10.
